Europäisches Patentamt

European Patent Office

Office européen des brevets

(11) Publication number: **0 194 155**
A1

# EUROPEAN PATENT APPLICATION

(21) Application number: 86301619.2

(22) Date of filing: 07.03.86

(51) Int. Cl.⁴: **A 01 K 31/08**

(30) Priority: 08.03.85 GB 8506117

(43) Date of publication of application: 10.09.86
Bulletin 86/37

(84) Designated Contracting States: **AT BE CH DE FR GB IT LI LU NL SE**

(71) Applicant: **Taylor, Joe, 26 Springwood Hall Gardens, Huddersfield West Yorkshire (GB)**
Applicant: **Siswick, Susan, 38 Moor Lane, Highburton Huddersfield West Yorkshire (GB)**

(72) Inventor: **Taylor, Joe, 26 Springwood Hall Gardens, Huddersfield West Yorkshire (GB)**

(74) Representative: **Sherrard-Smith, Hugh et al, Appleyard, Lees & Co. 15 Clare Road, Halifax, HX1 2HY West Yorkshire (GB)**

(54) Detachable connection of members.

(57) A rod (26) including a connector (28) being a part of a front panel is detachably connected to a pair of rods (30) and (32) being part of a base panel.

A hook (34) of the connector extends over, and part of the way around the rod (32) to oppose translational movement of the front panel to the left. The hook (34) engages with the top of the rod (32) and the connector (28) engages with the underside of the rod (30) to prevent the front panel from rotating relative to the base in a clockwise direction. A rod (24) comprising part of the front panel abuts the rod (30) to oppose movement of the front panel to the right.

To detach the front panel from the base, the front panel is pivoted in an anti-clockwise direction and moved downwardly and to the left. Attachment is a reversal of that procedure.

## DETACHABLE CONNECTION OF MEMBERS.

This invention relates to two or more members which may be detachably connected together and in particular, although not exclusively, to such members which may be incorporated in a container.

According to one aspect of the present invention, in a first member and a second member which are adapted to be detachably connected together, the members are arranged to be connected by causing relative translational movement in one direction and by causing relative pivotal movement in one direction, the members, when they are connected, co-operating with each other to oppose further pivotal movement in the one direction and relative translational movement in the other direction. The relative translational and pivotal movement occuring during the connection of the members may be arranged to take place simultaneously, concurrently or separately. It can be seen that the two members can be quickly connected together without the need for complicated catches or other moving parts, and yet still have considerable constraints placed on their relative movement when they are connected. When the members are connected, relative translational movement in the one direction may be arranged to be opposed, to provide a further restriction on the relative movement. Disconnection of the members may be a reversal of the connection procedure.

According to another aspect of the present invention, a first member and a second member are adapted to be detachably connected together whereby, when the members are connected together, a connector which extends from the first member co-operates with the second member by means of a hook, and pivotal movement of the first member relative to the second member in one direction is opposed by co-operation of the hook between the connector and the second member and by co-operation of an edge region of the first member with the second member, and translational movement of the first member relative to the second member in a direction opposite to that in which the connector extends from the first member is opposed by the co-operation of the hook between the connector and the second member, the first member being detachable from the second member by pivoting the first member in the other direction to allow the co-operation of the hook between the connector and the second member to be freed and moving the first member clear of the second member.

Either or both of the members may be generally planar.

When the members are connected, a portion of the first member may extend across the general extent of the second member whereby abutment of the first member where it extends across the second member opposes relative translational movement in the direction in which the connector extends from the first member. The connector may be arranged to extend back through the second member when the members are connected.

The connector may be provided as an extension of a strut which forms part of a partition.

The first member may be provided with a plurality of connectors spaced from each other.

The present invention also includes a cage in which at least two of the sides are arranged to be detachably connected in accordance with the present invention. The partitions of such a cage may be folded and detached in order to provide a compact storage configuration or quickly assembled.

The invention, may be carried into practice in various ways, but one embodiment will now be described by way of example and with reference to the accompanying drawings in which:

Figure 1 is a perspective view of a cage for a cat;

Figure 2A is a view taken on the line IIA of Figure 1 showing the detachable connection of the front with the base of the cage, and Figure 2B is a view similar to that shown in Figure 2A with the base and front in a different relative position.

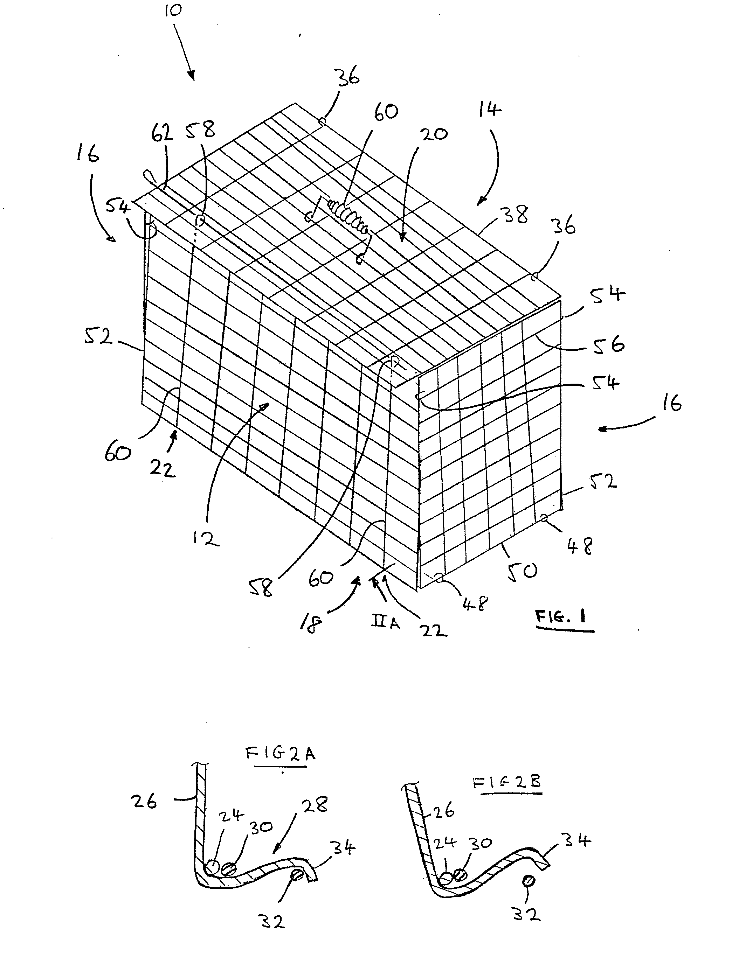

As shown in Figure 1, a cage 10 is made up of six wire mesh panels comprising a front 12, rear 14, ends 16, base 18 and top 20.

Each of the front and rear panels 12 and 14 are secured to the base panel 18 by a pair of detachable connections 22 shown in greater detail in Figures 2A and 2B.

In Figure 2A, the front panel is sectioned through a horizontally extending rod 24 to which is welded a vertically extending rod 26 which extends into a connector 28 at the lower end thereof. The base panel is sectioned through an outer and an adjacent inner parallel rod 30 and 32 respectively, the rods 30 and 32 extending in the same direction as the rod 24 of the front panel.

In the connected position shown in Figure 2A, the rod 24 of the front panel and the rod 30 of the base panel lie along side each other and the connector 28 extends under those rods 24 and 30 and then up through the opening between the rods 30 and 32 of the base panel.

4

0194155

At the innermost end of the connector, a hook 34 extends over, and part of the way around, the rod 32 of the base panel.

In the connected position, rotational movement of the front panel relative to the base panel in the clock wise direction (as viewed in Figure 2A) is resisted by abutment of the hook with the rod 32 of the base panel and by engagement of the connector 28 with the rod 30 of the base panel, and possibly also by the rod 24 of the front panel abuting the rod 30. Relative movement of the front panel to the left, as seen in Figure 2A, is resisted by engagement of the hook 34 with the rod 32, and relative movement of the front panel to the right is resisted by abutment of the rod 24 with the rod 30.

In order to disconnect the front panel from the base panel, the front panel is pivoted about its common edge with the base panel in an anticlockwise direction, as shown in Figure 2B. When the hook 34 is clear of the rod 32, the panels can be manoeuvered to allow the connector to be brought out from between the rods 30 and 32 of the base panel to separate the panels.

Thus, in the position shown in Figure 2, the front panel can be moved downwardly and to the left, as viewed in the drawing in order to detach the front panel from the base. However, it will be appreciated that the front panel could be rotated to extend in the same general direction as the base panel prior to removing the connector from the base panel, in which position the front panel could be moved downwardly, or downwardly and to the right or the left in order to remove the connector from the base. Thus, throughout this specification, where the translational movement is said to be in one direction or an opposite direction, that term is intended to cover general rather than specific directions and would, for instance, cover vertically upwards movement of the front panel during connection with the opposite direction including movement to the left: That is, it is enough for each direction or opposed direction to be made up with components which are opposed.

Connection of the panels is a reversal of the above described sequence.

The front panel is not permanently connected to any of the other panels. The rear panel is permanently connected to the top panel by a pair of eyes 36 which extend upwardly from vertical rods at either end of the rear panel and surround a common edge rod 38 of the top panel. The two end panels 16 are each permanently connected to the base panel by a pair of eyes 48 formed at opposed ends of two spaced rods of the base panel which eyes extend around the lower rod 50 of each base panel.

In the assembled position shown in Figure 1, the front and rear panels are each prevented from pivoting outwardly about their lower edge by upwardly extending rods 52 at either end of those panels being engaged by hooks 54, the hooks 54 being extensions at either end of a horizontally extending rod 56 adjacent to the upper edge of each end panel. A pair of eyes 58 on extensions of upwardly extending rods 60 on the front panel project through the top panel, and a locking rod 62 passes through those eyes 58 to prevent the top being hinged upwardly about the eyes 36 on the rear panel. A handle 60 is provided on the top panel to allow the case to be carried. Once the locking rod is removed, the top panel can be moved upwards about the hinge to allow cats to be placed into or removed from the cage.

6

0194155

When the cage is not required for use, or when the cage is being sent to customers, it can occupy a generally flat configuration. This flat configuration is arrived at by removing the locking rod 62, disengaging the hooks 54 from the front and rear panels, swinging those panels outwardly and disengaging each of the connections 22 with the base panel. The end panels can then fall inwardly, pivoting about the eyes 68 of the base panel to lie on top of the base panel and partially overlapping each other. The top and rear panels can then be folded flat against each other about the hinge provided by the eyes 36, and each flat component of the cage can then be stacked together. Assembly of the cage is a reversal of the above described sequence.

0194155

## CLAIMS.

1.    A first member (12) and a second member (18) adapted to be detachably connected together, the members being arranged to be connected by causing relative translational movement in one direction and by causing relative pivotal movement in one direction, the members, when they are connected, cooperating with each other to oppose further relative pivotal movement in the one direction and relative translational movement in the opposite direction.

2.    A first and a second member as claimed in Claim 1 in which, when the members are detachably connected together, they cooperate to oppose further relative translational movement in the one direction.

3.    A first and a second member as claimed in Claim 2 which, when the members are detachably connected, they cooperate to oppose further relative translational movement in the plane defined by the relative rotational movement.

4.    A first and a second member as claimed in Claim 1, 2 or 3 in which the first member includes a hook (34), the relative rotational and translational movement of the first and second members during their connection being arranged to bring the hook into engagement with the second member (32), engagement of the hook with the second member, when the members are connected, assisting in opposing further relative pivotal movement in the one direction and opposing relative translational movement in the opposite direction.

5.    A first and a second member as claimed in Claim 4 in which the first member is arranged to abut with the second member (30), when the members are connected, at a location spaced from the region where the hook engages with the second member, the abutment of the first member with the second member and the engagement of the hook with the second member opposing further relative pivotal movement in the one direction.

6. A first and a second member as claimed in Claim 4 or 5 and Claim 3 in which the first member is arranged to abut with the second member when the members are connected at a location spaced from the region where the hook engages with the second member, the abutment of the first member with the second member at the location spaced from the region when the hook engages with the second member opposing further relative translational movement in the one direction.

7. A first and a second member as claimed in Claim 6 in which the first member extends across the edge of the second member.

8. A first and a second member as claimed in Claim 7 in which, when the first member is being connected to the second member the hook (34) is passed through an opening in the second member.

9. A first and a second member as claimed in any preceding claim in which the members are adapted to be detached from each other by causing relative pivotal and translational movement in the opposite directions.

10. A method of detachably connecting a first and second member as claimed in any preceding claim comprising causing relative pivotal movement in one direction and relative translational movement in one direction.

FIG. 1

FIG2A

FIG2B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 210 546 (ATELIERS REUNIS)<br>* figures 5, 6 * | 1,2 | A 01 K 31/08 |
| Y | CA-A-1 054 077 (GREENING DONALD)<br>* figure 8 * | 1,2 | |
| Y | US-A-1 624 517 (STAMP)<br>* figure 17 * | 1,2 | |
| Y | US-A-2 783 738 (WILLEKE)<br>* figure 4 * | 1,2 | |
| Y | US-A-2 804 227 (ELFGREN)<br>* figure 4 * | 1,2 | |
| Y | US-A-4 140 080 (SNADER)<br>* figure 8 * | 1 | **TECHNICAL FIELDS SEARCHED (Int. Cl.4)**<br><br>A 01 K 31/08<br>A 01 K 1/03<br>F 16 B 7/22 |

The present search report has been drawn up for all claims

| Place of search | Date of completion of the search | Examiner |
|---|---|---|
| BERLIN | 09-05-1986 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82